Europäisches Patentamt

European Patent Office

Office européen des brevets

(19)

(11) Publication number: **0 074 140**
**B1**

(12) **EUROPEAN PATENT SPECIFICATION**

(45) Date of publication of patent specification: **03.12.86**

(21) Application number: **82201062.5**

(22) Date of filing: **30.08.82**

(51) Int. Cl.⁴: **A 23 L 1/226,** A 23 D 3/00

(54) Cream flavor composition for use with buttery flavored food products.

(30) Priority: **08.09.81 US 299701**

(43) Date of publication of application:
**16.03.83 Bulletin 83/11**

(45) Publication of the grant of the patent:
**03.12.86 Bulletin 86/49**

(84) Designated Contracting States:
**BE DE FR GB IT NL**

(56) References cited:
**BE-A- 781 846**
**CH-A- 578 311**

**CHEMICAL ABSTRACTS, vol. 78, no. 5, 5th
February 1973, page 374, no. 28086s,
Columbus, Ohio, US; K.H. NEV et al.: "Flavor of
Edelpilzkaese, a German blue mold cheese"**

(73) Proprietor: **THE PROCTER & GAMBLE
COMPANY
301 East Sixth Street
Cincinnati Ohio 45202 (US)**

(72) Inventor: **Sevenants, Michael Robert
557 Beaufort Court
Forest Park Ohio 45240 (US)**

(74) Representative: **Suslic, Lydia et al
Procter & Gamble European Technical Center
Temselaan 100
B-1820 Strombeek-Bever (BE)**

Courier Press, Leamington Spa, England.

## Description

The present application relates to flavor compositions. In particular, the present application relates to cream flavor compositions useful in improving the flavor impression of buttery flavored food products such as shortenings and margarines.

Butter has a particularly distinctive flavor and aroma. This flavor and aroma character is desirable for a number of food products. Such food products include oleaginous foods such as shortenings and emulsified spreads such as margarine. Also, a buttery flavor character is desirable in fried foods and baked goods such as cakes and cookies.

In standard butter manufacture, cream is separated from milk by centrifugation. After neutralization and pasteurization, the cream is ripened by inoculation with a bacterial culture known as a "starter". The amount of starter mixed with the cream is usually about 5%, although in some cases somewhat more can be used. Ripening is usually carried out at a temperature of from 50° to 55°F overnight; this time period can be reduced to a few hours when the temperature during ripening is from 65° to 70°F. It is mainly during this ripening step that the distinctive flavors and aroma of butter are generated. See *Bailey's Industrial Oil and Fat Products* (3rd Ed.) pp. 326—327.

The compounds contributing to the flavor and aroma of butter have long been a matter for discussion and conjecture. Some of the flavor character has been attributed to the lower carboxylic acids such as acetic, propionic and butyric acids. Another compound which contributes to the flavor and odor of butter is diacetyl, a yellow liquid having an extremely potent butter aroma. Other compounds isolated and identified as contributing to butter flavor and aroma include the lactones such as delta-decalactone (from butter oil) and delta-dodecalactone (from milk fat). See *Bailey's Industrial Oil and Fat Products, supra*, at pp. 322—323.

It has been found that a particular component of butter provides what is characterized as a creamy flavor impression. From gas chromatography of a typical butter, it has been determined that at least the following compounds (in free form) contribute to this creamy flavor impression:

| Compound | Amount (ppm) |
|---|---|
| 9-decenoic acid | 2 |
| 2-undecanone | 1 |
| 2-tridecanone | 6 |
| 2-pentadecanone | 6 |

Artificial or synthetic butter flavors used in various buttery flavored food products are frequently deficient in certain flavor characteristics. In particular, such butter flavors are missing the cream flavor impression of the above-noted compounds.

It is therefore an object of the present invention to improve the flavor impression of buttery flavored food products.

It is another object of the present invention to impart a creamy flavor impression to buttery flavored food products.

These and other objects of the present invention are hereinafter disclosed.

Disclosure of the invention

The present application relates to a novel flavor composition for imparting a creamy flavor impression to a variety of buttery flavored food products. This cream flavor composition consists essentially of:

(a) a carboxylic acid component selected from 8-nonenoic acid, 9-decenoic acid, 10-undecenoic acid, and mixtures thereof; and

(b) a higher methyl ketone component selected from 2-undecanone, 2-dodecanone, 2-tridecanone, 2-tetradecanone, 2-pentadecanone, 2-hexadecanone, and mixtures thereof.

The present application particularly relates to buttery flavored food products to which this cream flavor composition is added. The cream flavor composition which is added consists essentially of:

(a) a carboxylic acid component in an amount of from 0.0025 to 350 ppm and selected from the group consisting of 8-nonenoic acid, 9-decanoic acid, 10-undecenoic acid, and mixtures thereof; and

(b) a higher methyl ketone component selected from the group consisting of 2-undecanone and/or 2-dodecanone in amounts of from 0.0014 to 600 ppm, 2-tridecanone and/or 2-tetradecanone in amounts of from 0.0085 to 800 ppm, 2-pentadecanone and/or 2-hexadecanone in amounts of at least 0.0080 ppm, and mixtures thereof.

2-undecanone, 2-tridecanone and 2-pentadecanone are taught as being present in fresh butter and especially in heated butter flavor. See Kinsella "Butter Flavor", *Food Technology* (May, 1975), pp. 82—89. Also, 9-decanoic acid is taught as being present in butterfat and milkfat fractions probably in the form of glyceride esters. See Hilditch et al, "The Occurrence and Possible Significance of Some of the Minor Component Acids of Cow Milk Fat", *Biochem J.*, Vol. 30 (1936), pp. 1905—1914 (0.2% by weight 9-decanoic acid present in butterfat); Patton et al, "The Role of Lactones in Flavor Deterioration of Milk Fat", *Science*, Vol. 19 (1954), pp. 218—219 (9-decenoic acid precursor of decalactone in milkfat); Noda et al, "Separation and Identification of Fatty Acids", *Nippon Nogei-Kagaku Kaishi*, Vol. 30 (1956), pp. 106—111 (cow milkfat containing 0.1% by weight 9-decenoic acid). See also Ryhage, "Identification of Fatty Acids from Butterfat Using a Combined Gas Chromatograph Mass Spectrometer", *J. Dairy Research*, Vol. 34 (1967), pp. 115—121 (0.1% by weight methyl decanoate isolated from commercial butterfat).

Mixtures of unsaturated ketones or unsaturated carboxylic acids with lower methyl ketones are also known in the art. For example, Australian butter oil is disclosed as having methyl ketones of from 3 to 9 carbon atoms, as well as a decenoic acid. See Forss et al, "Volatile Compounds in Butter Oil", *J. Dairy Research*, Vol. 34, 2d issue (1967), pp. 131—136. Also, a mixture of one part 8-none-2-one with a number of flavor ingredients including 2-pentanone and 2-heptanone is disclosed as having a butterlike flavor. See U.S. Patent 3,904,780 to Yamamoto et al, issued Sept, 9, 1975 (Example 2). See also U.S. Patent 3,865,952 to Ney et al, issued Feb. 11, 1975 (blue cheese flavor composition containing 1-octen-3-ol in combination with methyl ketones having from 5 to 15 carbon atoms and fatty acids having from 2 to 12 carbon atoms. However, it has been surprisingly found that the combination of the specified unsaturated carboxylic acids with the specified higher methyl ketones of the present application imparts a creamy flavor impression to buttery flavored food products such as shortenings and margarines.

Definitions

The term "oleaginous food product" refers to a food product containing a fat and/or oil other than a fried food or baked good. Representative examples of oleaginous food products include emulsified spreads and shortenings.

The term "emulsified spread" refers to a water-in-oil or oil-in-water emulsion product. Such spreads include butter, margarine and low-fat spreads.

The term "margarine" refers to an emulsified spread characterized by an oil phase of at least about 80% by weight. Thus, margarines have an aqueous phase of up to about 20% by weight.

The term "fat" refers to a triglyceride composition characterized by a solid or plastic consistency at ambient temperatures, e.g. at about 70°F.

The term "oil" refers to a triglyceride composition characterized by a fluid or liquid consistency at ambient temperatures, e.g. at about 21.1°C (70°F).

The term "shortening" refers to a non-emulsified fat and/or oil product which can be used in preparing fried foods and baked goods.

The term "baked good" refers to a food product normally prepared from a mix containing shortening, sugar and flour. Representative examples of baked goods include cakes and cookies.

The term "milk" is defined as in the U.S. Government Standard of Identity in 21 Code of Federal Regulation 131.110.

The term "half and half" is defined as in the U.S. Government Standard of Identity in 21 Code of Federal Regulation 131.180.

Cream flavor composition

A. Components of composition

The cream flavor composition of the present application includes a carboxylic acid component. This carboxylic acid component is selected from 8-nonenoic acid, 9-decenoic acid, 10-undecanoic acid, and mixtures thereof. 9 decenoic acid is particularly preferred as the carboxylic acid component.

The cream flavor composition further includes a higher methyl ketone component. This higher methyl ketone component is selected from 2-undecanone, 2-dodecanone, 2-tridecanone, 2-tetradecanone, 2-pentadecanone, 2-hexadecanone, and mixtures thereof. The preferred higher methyl ketones are 2-undecanone, 2-tridecanone and 2-pentadecanone. A mixture of 2-undecanone, 2-tridecanone and 2-pentadecanone is a particularly preferred higher methyl ketone component.

The cream flavor composition consists essentially of the carboxylic acid component and the higher methyl ketone component. A substantially pure mixture of the carboxylic acid component and the higher methyl ketone component provides a particularly desirable creamy flavor impression. As used herein, the term "substantially pure mixture" refers to a mixture of the carboxylic acid component and the higher methyl ketone component with only trace impurities of other compounds.

B. Cream flavor character of composition

Numerous words can be used to describe a "cream" or "creamy" flavor impression. An indication of what is "creamy" can be derived from the comments of those comparing the flavor characteristics of milk to half and half. Half and half has been described as: (1) "richer"; (2) a "cream flavor/whipping cream flavor/more dairy flavor"; (3) having "more body/thicker mouthfeel"; (4) "sweeter". By comparison, a buttery flavored oil containing the cream flavor composition (9-decenoic acid, 2-undecanone, 2-tridecanone and 2-pentadecanone) of the present application (paneled against a buttery flavored oil without this composition) has been described as: (1) "milder"; (2) "richer/fuller"; (3) having "more body"; (4) "sweeter"; (5) having a "sweet dairy note"; (6) "smoother/more well-rounded".

Uses of cream flavor composition

A. Buttery flavored food products

The cream flavor composition of the present application can be added to a variety of buttery flavored food products. The composition is particularly useful in imparting creamy flavor impression to oleaginous food products. Such food products include buttery flavored shortenings and emulsified spreads such as margarine. The composition can also be used to improve the creamy flavor impression of butter. Other buttery flavored food products for which the cream flavor composition is useful include fried foods and baked goods such as cakes and cookies. For baked good mixes, the cream flavor composition is normally included as part of the shortening ingredients.

The amounts (ppm by weight of the battery flavored food product) of the two components of the cream flavor composition can vary depending upon the type of buttery flavored food product. The amount of the carboxylic acid component can range from 0.0025 ppm to 350 ppm. The amounts of the higher methyl ketones vary depending upon the particular methyl ketone. For 2-undecanone (or 2-dodecanone), the amount ranges from 0.0014 to 600 ppm; for 2-tridecanone (or 2-tetradecanone), from 0.0085 to 800 ppm; for 2-pendadecanone (or 2-hexadecanone), at least 0.0080 ppm.

The variance in amounts of the two components for buttery flavored food products is illustrated by emulsified spreads and buttery flavored shortenings. Generally, emulsified spreads need lesser amounts of the two components for a detectable creamy flavor impression while buttery flavored shortening products can have a desirable creamy flavor impression with larger amounts of the two components. For emulsified spreads, the amount of the carboxylic acid component is typically from 0.0025 to 50 ppm, while the amounts of 2-undecanone (or 2-dodecanone), 2-tridecanone (or 2-tetradecanone), and 2-pentadecanone (or 2-hexadecanone) are typically from 0.0014 to 400 ppm, from 0.0085 to 500 ppm, and from 0.0080 to 1000 ppm, respectively. For shortenings, the amount of the carboxylic acid component is typically from 0.5 to 50 ppm, while the amounts of 2-undecanone (or 2-dodecanone), 2-tridecanone (or 2-tetradecanone), and 2-pentadecanone (or 2-hexadecanone) are typically from 0.25 to 400 ppm, from 1.5 to 500 ppm, and from 1.5 to 1000 ppm, respectively.

B. Buttery flavor component

The cream flavor composition of the present application is usually incorporated as part of the buttery flavor component of the food product. The buttery flavor component can be derived from natural dairy sources such as nonfat milk solids, cooked milk, whey solids, buttermilk, butter oil, and butter cultures. A variety of saturated fatty acids, including butyric, capric, caprylic, and caproic acids, can be included in the buttery flavor component. A particularly desirable buttery compound is diacetyl derived either synthetically or more typically from a bacterial culture. Also, the methyl ketones such as 2-pentanone and 2-heptanone can be included in the buttery flavor component. Other compounds which have been used in buttery flavor compositions include the lactones, such as delta-decalactone and delta-dodecalactone, the aldehydes such as cis-heptanal, and the indoles such as skatole.

Panel testing illustrating scope of cream flavor compositions of present application and uses thereof

The following panel testing illustrates the scope of the cream flavor compositions of the present application and the uses thereof:

A. Paneling in buttery flavored shortening products

1. Upper limits

Various buttery flavored oil formulations were prepared by dispersing the cream flavor compositions, together with a butter flavor composition, in partially hydrogenated and winterized soybean oil having an iodine value of 110—115. The level of the butter flavor composition was kept constant in the various oil formulations at 203 ppm The butter flavor composition consisted of a Butter Flavor A (mixture of butter flavor compounds, including butyric acid, caprylic acid, caproic acid, lauric acid, butyl butyryl lactate, delta-decalactone, and delta-dodecalactone) at 136 ppm and a Butter Flavor B (mixture of butter flavor compounds, including diacetyl, butyl butyryl lactate, delta-decalactone, and valeric acid) at 67 ppm. During paneling of the oil formulations, panelists were asked to evaluate acceptability thereof as part of a flavor system. The panelists were skilled in organoleptic evaluations of butter and buttery flavored food products.

The cream flavor compositions paneled and the results from the paneling are presented in the following Table:

4

**0 074 140**

| Compounds (ppm)* | Cream flavor composition | | | | |
|---|---|---|---|---|---|
| | I | II | III | IV | V |
| 9-decenoic acid | 350 | 25 | 50 | 50 | 350 |
| 2-undecanone | 1 | 600 | — | — | 600 |
| 2-tridecanone | 6 | — | 800 | — | 800 |
| 2-pentadecanone | 6 | — | — | 1000 | 1000 |
| Panel | | | | | |
| Total No. | 10 | 8 | 10 | 9 | 9 |
| Acceptable | 7 | 6 | 7 | 7 | 3 |
| Unacceptable | 3 | 2 | 3 | 2 | 6 |

*Compounds obtained from Bedoukian Research, Inc., Danbury, Conn.

As shown by the above Table (cream flavor composition I—IV), 9-decenoic acid, 2-undecanone, 2-tridecanone and 2-pentadecanone can be acceptable in cream flavor compositions at levels as high as 350 ppm, 600 ppm, 800 ppm and 1000 ppm, respectively. As also shown by the above Table (cream flavor composition V), the levels of these components should be adjusted accordingly when the cream flavor composition contains a mixture of 9-decanoic acid, 2-undecanone, 2-tridecanone and 2-pentadecanone.

2. Preferred higher levels

Various buttery flavored oil formulations were prepared as in the preceding Upper Limits paneling. Butter Flavors A and B were used with the levels being the same. During paneling, panelists were asked whether the flavor of each oil formulation would taste good in a margarine. The cream flavor compositions paneled and the results from the paneling are presented in the following Table:

| Compounds (ppm) | Cream flavor composition | | | |
|---|---|---|---|---|
| | VI | VII | VIII | IX |
| 9-decanoic acid | 50 | 25 | 25 | 25 |
| 2-undecanone | 1 | 400 | — | — |
| 2-tridecanone | 6 | — | 500 | — |
| 2-pentadecanone | 6 | — | — | 1000 |
| Panel | | | | |
| Total No. | 9 | 9 | 10 | 9 |
| Good | 9 | 5 | 8 | 9 |
| No Good | 0 | 4 | 2 | 0 |

As shown by the above Table, 9-decanoic acid, 2-undecanone, 2-tridecanone, and 2-pentadecanone were preferred in cream flavor compositions for buttery flavored oils at levels as high as 50 ppm, 400 ppm, 500 ppm and 1000 ppm, respectively.

3. Detectable lower levels

Buttery flavored oil formulations were prepared as in preceding Upper Limits paneling. Butter Flavors A and B were used but at half the amount (68 and 33.5 ppm, respectively). Two oil formulations were paneled in a pair comparison test wherein one of the formulations contained the cream flavor composition. Panelists were asked to determine which of the oil formulations was more creamy. The cream flavor compositions paneled and the results from the paneling are presented in the following Table:

5

| Compounds (ppm) | Cream flavor composition | |
| --- | --- | --- |
| | X | XI |
| 9-decenoic acid | 0.5 | 0.25 |
| 2-undecanone | 0.25 | 0.13 |
| 2-tridecanone | 1.5 | 0.75 |
| 2-pentadecanone | 1.5 | 0.75 |
| Panel | | |
| Total No. | 9 | 10 |
| Correct | 8* | 6** |
| Incorrect | 1 | 4 |

*Significant difference
**Nonsignificant difference

As shown by the above Table, a mixture of 9-decenoic acid, 2-undecanone, 2-tridecanone and 2-pentadecanone was detectable in buttery flavored oils at the level represented by composition X, but not at the level represented by composition XI.

B. Paneling in margarines
1. Lower limits

Cream flavor compositions according to the present application were paneled in margarines. The margarines were obtained by mixing standard aqueous phase ingredients of milk solids, salt, water and preservatives with an oil phase consisting of hydrogenated soybean oil, mono- and di-glyceride and lecithin emulsifiers, and beta-carotene.

A butter flavor composition, with or without the cream flavor composition, was added as part of the oil phase. This butter flavor composition consisted of the following:

| Compound | Amount (ppm) |
| --- | --- |
| Dairy Flavor A* | 682 |
| Dairy Flavor B** | 91 |
| Corn Syrup | 1350 |
| Butter Flavor A | 136 |
| Butter Flavor B | 67 |

*mixture of dairy flavor compounds including carboxylic acids, lactones, ketones and diketones
**mixture of dairy flavor compounds including carboxylic acids, lactones, ketones and diketones

The cream flavor composition (XII), when added, consisted of the following:

| Compound | Amount (ppm) |
| --- | --- |
| 9-decenoic acid | 0.00265 |
| 2-undecanone | 0.00145 |
| 2-tridecanone | 0.0086 |
| 2-pentadecanone | 0.0081 |

The aqueous and oil phase ingredients were mixed. When the emulsion set up, it was then poured into tubs which were refrigerated for storage.

For paneling, the margarine products were heated until completely melted. Margaines containing the cream flavor composition were triangle tested against margarines which did not contain the cream flavor composition. Two panelists sensitive to the cream flavor composition were asked to identify which was the odd sample. One panelist was able to identify the odd sample 7 out of 7 times; the other panelist 1 out of 3 times. Such paneling indicates that the flavor impression of a mixture of 9-decenoic acid, 2-undecanone, 2-tridecanone, and 2-pentadecanone, is detectable at the level represented by composition XII in margarine.

2. Higher levels

Panelists were given a commercial margarine (Royal Scot margarine) and were told it was defined as desirable. Panelists were then asked to judge the desirability of margarines containing the cream flavor composition prepared as in the Lower Limits paneling. The cream flavor compositions paneled and the results of the paneling are presented in the following Table:

|  | Cream flavor composition | |
| Compounds (ppm) | XIII | XIV |
| --- | --- | --- |
| 9-decenoic acid | 50 | 38 |
| 2-undecanone | 400 | 300 |
| 2-tridecanone | 500 | 375 |
| 2-pentadecanone | 1000 | 750 |
| Panel | | |
|    Total No. | 10 | 10 |
|    Desirable | 6 | 9 |
|    Undesirable | 4 | 1 |

As shown by the above Table, a mixture of 9-decenoic acid, 2-undecanone, 2-tridecanone and 2-pentadecanone is acceptable in cream flavor compositions for margarines at the high levels of compositions XIII and XIV.

C. Evaluation of cream flavor impression

The cream flavor impression of the compositions according to the present application was evaluated. Two buttery flavored oil formulations similar to those used in the Shortening paneling were made containing Butter Flavor A (68 ppm) and Butter Flavor B (33.5 ppm). One of the oil formulations also contained a cream flavor composition (XV) which consisted of the following:

| Compound | Amount (ppm) |
| --- | --- |
| 9-decenoic acid | 2 |
| 2-undecanone | 1 |
| 2-tridecanone | 6 |
| 2-pentadecanone | 6 |

These two oil formulations were then paneled. The panelists were trained to detect "creamy" by paneling milk against half and half, as defined previously, in particular Meyer's 2% Vitamin A & D lowfat milk versus Mayer's Ultra-Pasteurized Half & Half. Of the 7 panelists used in the panel, all 7 identified the oil formulation containing the cream flavor composition as having the creamy flavor.

**Claims**

1. A cream flavor composition, which consists essentially of:

(a) a carboxylic acid component selected from 8-nonenoic acid, 9-decenoic acid, 10-undecenoic acid, and mixtures thereof (.0025 to 350 ppm); and

(b) a higher methyl ketone component selected from 2-undecanone in an amount of from .0014 to 600 ppm, 2-dodecanone in an amount of from .0014 to 600 ppm, 2-tridecanone in an amount of from .0085 to 800 ppm, 2-tetradecanone in an amount of from .0085 to 800 ppm, 2-pentadecanone in an amount of at least .0080 ppm, 2-hexadecanone in an amount of at least .0080 ppm, and mixtures thereof.

2. A composition according to Claim 1, wherein said carboxylic acid component is 9-decenoic acid.

7

0 074 140

3. A composition according to Claim 2, wherein said higher methyl ketone component is selected from 2-undecanone, 2-tridecanone, 2-pentadecanone, and mixtures thereof.

4. A composition according to Claim 3 which is a substantially pure mixture of said 9-decenoic acid and said higher methyl ketone component.

5. A buttery flavored food product which has added thereto a cream flavor composition, which consists essentially of:

(a) a carboxylic acid component in an amount of from 0.0025 to 350 ppm and selected from 8-nonenoic acid, 9-decenoic acid, 10-undecenoic acid, and mixtures thereof; and

(b) a higher methyl ketone component selected from 2-undecanone in an amount of from 0.0014 to 600 ppm, 2-dodecanone in an amount of from 0.0014 to 600 ppm, 2-tridecanone in an amount of from 0.0085 to 800 ppm, 2-tetradecanone in an amount of from 0.0085 to 800 ppm, 2-pentadecanone in an amount of at least 0.0080 ppm, 2-hexadecanone in an amount of at least 0.0080 ppm, and mixtures thereof.

6. A food product according to Claim 5 which is a buttery flavored oleaginous food product.

7. A food product according to Claim 6 which is a buttery flavored shortening.

8. A food product according to Claim 7 wherein the amount of 9-decenoic acid is from 0.5 to 50 ppm.

9. A food product according to Claim 8 wherein the amount of 2-undecanone is from 0.25 to 400 ppm, the amount of 2-tridecanone is from 1.5 to 500 ppm and the amount of 2-pentadecanone is from 1.5 to 1000 ppm.

10. A food product according to Claim 6 which is an emulsified spread.

11. A food product according to Claim 10 wherein the emulsified spread is a margarine.

12. A food product according to Claim 11 wherein the amount of 9-decenoic acid is from 0.0025 to 50 ppm.

13. A food product according to Claim 12 wherein the amount of 2-undecanone is from 0.0014 to 400 ppm, the amount of 2-tridecanone is from 0.0085 to 500 ppm, and the amount of 2-pentadecanone is from 0.0080 to 1000 ppm.

14. A method for improving the flavor of a buttery flavored food product, which comprises the step of:

(a) adding to a buttery flavored food product, a cream flavor composition which consists essentially of:

(i) a carboxylic acid component in an amount of from 0.0025 to 350 ppm and selected from 8-nonenoic acid, 9-decenoic acid, 10-undecenoic acid, and mixtures thereof; and

(ii) a higher methyl ketone component selected from 2-undecanone in an amount of from 0.0014 to 600 ppm, 2-dodecanone in an amount of from 0.0014 to 600 ppm, 2-tridecanone in an amount of from 0.0085 to 800 ppm, 2-tetradecanone in an amount of from 0.0085 to 800 ppm, 2-pentadecanone in an amount of at least 0.0080 ppm, 2-hexadecanone in an amount of at least 0.0080 ppm, and mixtures thereof.

.

**Patentansprüche**

1. Sahnegeschmackzusammensetzung, die im wesentlichen besteht aus:

(a) einer Carbonsäure-Komponente ausgewählt aus 8-Nonensäure, 9-Decensäure, 10-Undecensäure und Gemischen davon (0,0025 bis 350 ppm); und

(b) einer höheren Methyl-Keton-Komponente ausgewählt aus 2-Undecanon in einer Menge von 0,0014 bis 600 ppm, 2-Dodecanon in einer Menge von 0,0014 bis 600 ppm, 2-Tridecanon in einer Menge von 0,0085 bis 800 ppm, 2-Tetradecanon in einer Menge von 0,0085 bis 800 ppm, 2-Pentadecanon in einer Menge von mindestens 0,0080 ppm, 2-Hexadecanon in einer Menge von mindestens 0,0080 ppm und Gemischen davon.

2. Eine Zusammensetzung nach Anspruch 1, worin die Carbonsäurekomponente 9-Decensäure ist.

3. Eine Zusammensetzung nach Anspruch 2, worin die höhere Methyl-Keton-Komponente ausgewählt ist aus 2-Undecanon, 2-Tridecanon, 2-Pentadecanon und Gemischen davon.

4. Eine Zusammensetzung nach Anspruch 3, die im wesentlichen ein reines Gemisch aus der 9-Decansäure und der höheren Methyl-Keton-Komponente ist.

5. Ein Nahrungsmittelprodukt mit Buttergeschmack, dem eine Sahnegeschmackzusammensetzung zugesetzt worden ist, die im wesentlichen besteht aus:

(a) einer Carbonsäurekomponente in einer Menge von 0,0025 bis 350 ppm und ausgewählt aus 8-Nonensäure, 9-Decensäure, 10-Undecensäure und Gemischen davon und

(b) einer höheren Methyl-Keton-Komponente ausgewählt aus 2-Undecanon in einer Menge von 0,0014 bis 600 ppm, 2-Dodecanon in einer Menge von 0,0014 bis 600 ppm, 2-Tridecanon in einer Menge von 0,0085 bis 800 ppm, 2-Tetradecanon in einer Menge von 0,0085 bis 800 ppm, 2-Pendadecanon in einer Menge von mindestens 0,0080 ppm, 2-Hexadecanon in einer Menge von mindestens 0,0080 ppm und Gemischen davon.

6. Ein Nahrungsmittelprodukt nach Anspruch 5, das ein öliges Nahrungsmittelprodukt mit Buttergeschmack ist.

7. Ein Nahrungsmittelprodukt nach Anspruch 6, das ein Backfett mit Buttergeschmack ist.

8. Ein Nahrungsmittelprodukt nach Anspruch 7, worin die Menge an 9-Decensäure 0,5 bis 50 ppm beträgt.

9. Ein Nahrungsmittelprodukt nach Anspruch 6, worin die Menge an 2-Undecanon von 0,25 bis 400

8

# 0 074 140

ppm, die Menge an 2-Tridecanon von 1,5 bis 500 ppm und die Menge an 2-Pentadecanon von 1,5 bis 1000 ppm beträgt.

10. Ein Nahrungsmittelprodukt nach Anspruch 6, das ein emulgierter Aufstrich ist.

11. Ein Nahrungsmittelprodukt nach Anspruch 10, worin der emulgierte Aufstrich Margarine ist.

12. Ein Nahrungsmittelprodukt nach Anspruch 11, worin die Menge an 9-Decensäure 0,0025 bis 50 ppm beträgt.

13. Ein Nahrungsmittelprodukt nach Anspruch 12, worin die Menge an 2-Undecanon von 0,0014 bis 400 ppm, die Menge an 2-Tridecanon von 0,0085 bis 500 ppm und die Menge an 2-Pentadecanon von 0,0080 bis 1000 ppm beträgt.

14. Ein Verfahren zur Verbesserung des Geschmacks eines Nahrungsmittelproduktes mit Buttergeschmack, bei dem man:

(a) dam Nahrungsmittelprodukt mit Buttergeschmack eine Sahnegeschmackszusammensetzung zusetzt, die im wesentlichen besteht aus:

(i) einer Carbonsäurekomponente in einer Menge von etwa 0,0025 bis etwa 350 ppm und ausgewählt ist aus 8-Nonensäure, 9-Decensäure, 10-Undecensäure und Gemischen davon und

(ii) einer höheren Methyl-Keton-Komponente ausgewählt aus 2-Undecanon in einer Menge von 0,0014 bis 600 ppm, 2-Dodecanon in einer Menge von 0,0014 bis 600 ppm, 2-Tridecanon in einer Menge von 0,0085 bis 800 ppm, 2-Tetradecanon in einer Menge von 0,0085 bis 800 ppm, 2-Pentadecanon in einer Menge von mindestens 0,0080 ppm, 2-Hexadecanon in einer Menge von mindestens 0,0080 ppm und Gemischen davon.

**Revendications**

1. Composition à arôme de crème, qui est essentiellement constituée:

(a) d'un constituant acide carboxylique choisi parmi l'acide 8-nonénoïque, l'acide 9-décénoïque, l'acide 10-undécénoïque et leurs mélanges (0,0025 à 350 ppm); et

(b) d'un constituant méthylcétone supérieure choisi parmi la 2-undécanone en quantité de 0,0014 à 600 ppm, la 2-dodécanone en quantité de 0,0014 à 600 ppm, la 2-tridécanone en quantité de 0,0085 à 800 ppm; la 2-tétradécanone en quantité de 0,0085 à 800 ppm, la 2-pentadécanone en quantité d'au moins 0,0080 ppm, la 2-hexadécanone en quantité d'au moins 0,0080 ppm et leurs mélanges.

2. Composition selon la revendication 1, dans laquelle le constituant acide carboxylique est l'acide 9-décénoïque.

3. Composition selon la revendication 2, dans laquelle le dit constituant méthylcétone supérieure est choisi parmi la 2-undécanone, la 2-tridécanone, la 2-pentadécanone et leurs mélanges.

4. Composition selon la revendication 3, qui est essentiellement un mélange pur du dit acide 9-décénoïque et du dit constituant méthylcétone supérieure.

5. Produit alimentaire ayant un goût de beurre auquel est ajoutée une composition à arôme de crème, qui est essentiellement constituée:

(a) d'un constituant acide carboxylique, en quantité de 0,0025 à 350 ppm et choisi parmi l'acide 8-nonénoïque, l'acide 9-décénoïque, l'acide 10-undécénoïque et leurs mélanges; et

(b) d'un constituant méthylcétone supérieure choisi parmi la 2-undécanone en quantité de 0,0014 à 600 ppm, la 2-dodécanone en quantité de 0,0014 à 600 ppm, la 2-tridécanone en quantité de 0,0085 à 800 ppm; la 2-tétradécanone en quantité de 0,0085 à 800 ppm, la 2-pentadécanone en quantité d'au moins 0,0080 ppm, la 2-hexadécanone en quantité d'au moins 0,0080 ppm et leurs mélanges.

6. Produit alimentaire selon la revendication 5, qui est un produit alimentaire oléagineux ayant un goût de beurre.

7. Produit alimentaire selon la revendication 6, qui est une matière grasse ayant un goût de beurre.

8. Produit alimentaire selon la revendication 7, dans lequel la quantité d'acide 9-décénoïque est de 0,5 à 50 ppm.

9. Produit alimentaire selon la revendication 8, dans lequel la quantité de 2-undécanone est de 0,25 à 400 ppm, la quantité de 2-tridécanone est de 1,5 à 500 ppm et la quantité de 2-pentadécanone est de 1,5 à 1000 ppm.

10. Produit alimentaire selon la revendication 6, qui est un produit à tartiner émulsifié.

11. Produit alimentaire selon la revendication 10, dans lequel le produit à tartiner émulsifié est une margarine.

12. Produit alimentaire selon la revendication 11, dans lequel la quantité d'acide 9-décénoïque est de 0,0025 à 50 ppm.

13. Produit alimentaire selon la revendication 12, dans lequel la quantité de 2-undécanone est de 0,0014 à 400 ppm, la quantité de 2-tridécanone est de 0,0085 à 500 ppm et la quantité de 2-pentadécanone est de 0,0080 à 1000 ppm.

14. Procédé pour améliorer le goût d'un produit alimentaire ayant un goût de beurre, qui comprend l'étape selon laquelle:

(a) on ajoute à un produit alimentaire ayant un goût de beurre une composition à arôme de crème qui est essentiellement constituée:

(i) d'un constituant acide carboxylique, en quantité de 0,0025 à 350 ppm et choisi parmi l'acide 8-nonénoïque, l'acide 9-décénoïque, l'acide 10-undécénoïque et leurs mélanges; et

(ii) d'un constituant méthylcétone supérieure choisi parmi la 2-undécanone en quantité de 0,0014 à 600 ppm, la 2-dodécanone en quantité de 0,0014 à 600 ppm, la 2-tridécanone en quantité de 0,0085 à 800 ppm; la 2-tétradécanone en quantité de 0,0085 à 800 ppm, la 2-pentadécanone en quantité d'au moins 0,0080 ppm, la 2-hexadécanone en quantité d'au moins 0,0080 ppm et leurs mélanges.